# NEUE EUROPÄISCHE PATENTSCHRIFT

(11) **EP 3 554 772 B2**
(45) Veröffentlichungstag und Bekanntmachung des Hinweises auf die Entscheidung über den Einspruch: **20.12.2023**
(45) Hinweis auf die Patenterteilung: 05.05.2021
(21) Anmeldenummer: 17801040.1
(22) Anmeldetag: 20.11.2017
(51) Int. Cl.: B25J 9/16

(54) **KOLLISIONSÜBERWACHUNG EINES ROBOTERS**
COLLISION MONITORING OF A ROBOT
SURVEILLANCE ANTICOLLISION D'UN ROBOT

(30) Priorität: 15.12.2016 DE 102016014989
(43) Veröffentlichungstag der Anmeldung: 23.10.2019
(73) Patentinhaber: KUKA Deutschland GmbH, 86165 Augsburg (DE)
(72) Erfinder: LANGGARTNER, Verena, 86167 Augsburg (DE); QUITTKAT, Anja, 86316 Friedberg (DE)
(74) Vertreter: Wallinger Ricker Schlotter Tostmann
(86) Internationale Anmeldenummer: PCT/EP2017/079741
(87) Internationale Veröffentlichungsnummer: WO 2018/108457

(56) Entgegenhaltungen:
- EP-A1- 2 482 156
- EP-A2- 2 839 934
- DE-A1-102013 016 878
- US-A1- 2016 001 446

## Beschreibung

Die vorliegende Erfindung betrifft ein Verfahren und eine Steuerung zur Kollisionsüberwachung eines Roboters, eine Roboteranordnung mit der Steuerung sowie ein Computerprogrammprodukt zur Durchführung des Verfahrens.

Aus betriebsinterner Praxis ist es bekannt, Kollisionen von Robotern festzustellen, falls Abweichungen zwischen erfassten, tatsächlichen Ist- und erwarteten, insbesondere modellbasiert ermittelten, Werten ("Soll-Werten") von Achslasten vorgegebene Grenzwerte übersteigen.

Soll-Werte können insbesondere aufgrund variierender Umgebungsbedingungen wie beispielsweise temperaturbedingt erhöhter Reibung, unterschiedlichen robotergeführten Nutzlasten und dergleichen, aufgrund variierender Posen und Bewegungen, insbesondere Geschwindigkeiten und Beschleunigungen, des Roboters, aufgrund variierender und/oder verzögerter Verarbeitung und dergleichen von unterschiedlicher Güte sein.

Die EP 2 839 934 A2 offenbart ein Verfahren zum Steuern eines Roboters, wobei eine Fehlerreaktion auf Basis einer Grenzwertüberwachung einer Abtriebsgröße des Roboters ausgewählt wird.

Die EP 2482 156 A1 offenbart eine Vorrichtung zur Kollisionsüberwachung einer Werkzeugmaschine zum Erkennen einer Kollision, wenn ein erfasster Messwert einen Kollisionsgrenzwert überschreitet. Der Kollisionsgrenzwert wird dabei aus einem vorher erfassten maximalen Messwert und einem Toleranzwert gebildet.

Entsprechend ist die Vorgabe von Grenzwerten für die noch tolerierten bzw. die bereits als kollisionsbedingt angenommenen Abweichungen zwischen Ist- und Soll-Werten umständlich und eine zuverlässige Erkennung tatsächlicher Kollisionen bei möglichst geringem unbegründeten Ansprechen der Kollisionsüberwachung schwierig. Aufgabe der vorliegenden Erfindung ist es, den Betrieb, insbesondere eine Kollisionsüberwachung, eines Roboters zu verbessern, insbesondere eines oder mehrere der vorstehend erläuterten Probleme zu reduzieren.

Diese Aufgabe wird durch ein Verfahren mit den Merkmalen des Anspruchs 1 gelöst. Ansprüche 10 - 12 stellen eine Steuerung bzw. ein Computerprogrammprodukt zur Durchführung eines hier beschriebenen Verfahrens bzw. eine Roboteranordnung mit einer hier beschriebenen Steuerung unter Schutz. Die Unteransprüche betreffen vorteilhafte Weiterbildungen.

Nach einer Ausführung der vorliegenden Erfindung werden eine oder mehrere (Bewegungs)Achsen eines Roboters, der in einer Ausführung wenigstens vier, insbesondere wenigstens sechs, insbesondere wenigstens sieben, Achsen und Antriebe zum Verstellen der Achsen aufweist, (jeweils) auf Kollision überwacht.

Hierzu wird nach einer Ausführung der vorliegenden Erfindung (jeweils) ein Ist-Wert einer Achslast der (jeweiligen) Achse des Roboters ermittelt, insbesondere erfasst, insbesondere (kontinuierlich oder periodisch) ein aktueller Ist-Wert, und eine Kollision des Roboters, insbesondere der (jeweiligen) Achse, festgestellt, falls eine Abweichung zwischen diesem Ist-Wert und einem Referenzwert der Achslast einen Grenzwert übersteigt

Eine Achslast im Sinne der vorliegenden Erfindung kann insbesondere ein(e) auf die bzw. an der Achse, insbesondere deren Antrieb, insbesondere dessen Getriebe und/oder Motor, insbesondere Elektromotor, wirkende(s) Kraft bzw. Drehmoment umfassen, insbesondere sein.

Ein Ist-Wert einer Achslast wird in einer Ausführung mittels eines Erfassungsmittels, insbesondere wenigstens eines Sensors, insbesondere Kraft- bzw. Drehmomentsensors, der Achse und/oder in Abhängigkeit bzw. auf Basis einer Leistungsaufnahme ihres Antriebs ermittelt.

Der Referenzwert ist in einer Ausführung, insbesondere in wenigstens einem (Bewegungs-)Betriebsmodus, ein bei kollisionsfreiem Betrieb bzw. ohne Kollision erwarteter Wert der Achslast, der in einer Ausführung prognostiziert, insbesondere vorausberechnet, und/oder modellbasiert, insbesondere in Abhängigkeit bzw. auf Basis von einer äußeren Last, insbesondere Kontakt- und/oder Nutzlast, und/oder, insbesondere Ist- bzw. gemessenen, Pose und/oder Bewegung, insbesondere Geschwindigkeit und/oder Beschleunigung, des Roboters ermittelt wird. Insbesondere solch ein ohne Kollision bzw. bei kollisionsfreiem Betrieb erwarteter Wert wird vorliegend verallgemeinernd als "Soll-Wert" bezeichnet, insbesondere, da er in einer Ausführung einer modellbasiert ermittelten Antriebslast der Achse entsprechen kann.

Nach einem (ersten) Aspekt der vorliegenden Erfindung wird der Grenzwert für eine (zulässige bzw. nicht kollisionsbedingte) Abweichung zwischen dem, insbesondere aktuellen, Ist-Wert und dem, insbesondere aktuellen, Referenzwert, insbesondere einem, insbesondere hierfür (ohne Kollision), erwarteten, insbesondere prognostizierten und/oder modellbasierten bzw. Soll-Wert, der Achslast in Abhängigkeit bzw. auf Basis von einer oder mehrerer Abweichung(en) zwischen vorhergehend(ermittelt)en entsprechenden Ist- und Referenzwert(en) der Achslast, ("vorhergehenden Abweichung(en)") ermittelt, insbesondere Abweichung(en) unmittelbar vorhergehend(ermittelt)er Ist- und Referenzwerte.

Dem liegt die Überlegung zugrunde, dass eine aktuelle Abweichung, die im Wesentlichen einer oder mehreren vorhergehenden Abweichung entspricht, die nicht durch eine Kollision, sondern beispielsweise variierende Umgebungsbedingungen, Posen und Bewegungen, insbesondere systematische (Modell)Fehler, insbesondere der Referenzwerte, bedingt sind, ebenfalls (wieder) hierdurch und nicht durch eine Kollision bedingt ist. Entsprechend werden nach diesem (ersten) Aspekt aus Daten der Vergangenheit Vorhersagen für ein aktuelles bzw. zukünftiges Verhalten getroffen.

Somit kann in einer Ausführung der Grenzwert vorteilhaft automatisch an unterschiedliche Umgebungsbedingungen, Posen, Bewegungen und dergleichen angepasst und so in einer Ausführung die Vorgabe von Grenzwerten vereinfacht und/oder eine zuverlässige(re) Erkennung tatsächlicher Kollisionen ermöglicht und/oder die Gefahr eines unbegründeten Ansprechens der Kollisionsüberwachung reduziert werden.

Erfindungsgemäß wird der Grenzwert in Abhängigkeit von, insbesondere proportional zu, einem gleitenden, Mittelwert vorhergehender Abweichungen zwischen Ist- und Referenzwert(en) ermittelt. Ein (gleitender) Mittelwert kann allgemein in fachüblicher Weise ein nach einer vorgegebenen Rechenvorschrift aus zwei oder mehr, insbesondere unmittelbar, vorhergehenden Abweichungen ermittelter Wert sein, insbesondere deren arithmetisches, geometrisches oder quadratisches Mittel oder dergleichen.

Erfindungsgemäß wird der gleitende Mittelwert über wenigstens 5 Millisekunden ("ms"), insbesondere wenigstens 10 ms, insbesondere wenigstens 50 ms, und/oder höchstens 200 ms, insbesondere höchstens 150 ms, insbesondere höchstens 100 ms, ermittelt.

Durch einen, insbesondere gleitenden und/oder über einen solchen Zeitraum ermittelten, Mittelwert kann in einer Ausführung die Gefahr reduziert werden, dass der Grenzwert bei einer tatsächlichen Kollision ungewollt schrittweise erhöht wird.

In einer Ausführung wird der Grenzwert durch einen vorgegebenen minimalen und/oder maximalen Grenzwert limitiert bzw. nach unten auf einen vorgegebenen minimalen Grenzwert und/oder nach oben auf einen vorgegebenen maximalen Grenzwert begrenzt.

Durch eine Limitierung auf einen vorgegebenen minimalen Grenzwert kann in einer Ausführung die Gefahr eines unbegründeten Ansprechens der Kollisionsüberwachung reduziert werden, durch eine Limitierung auf einen vorgegebenen maximalen Grenzwert in einer Ausführung die Gefahr einer Nicht-Erkennung tatsächlicher Kollisionen.

In einer Ausführung ist bzw. wird der Grenzwert durch einen Anwender konfigurierbar bzw. konfiguriert, insbesondere skalierbar bzw. skaliert.

Hierdurch kann in einer Ausführung eine Sensibilität der Kollisionsüberwachung vorteilhaft anwendungsspezifisch angepasst werden, beispielsweise an unterschiedliche Prozess- und/oder Sicherheitsanforderungen, Roboterkonfigurationen oder dergleichen.

Nach einem weiteren (zweiten) Aspekt der vorliegenden Erfindung, der zusätzlich zu dem vorgenannten Aspekt verwirklicht sein kann, wird ein bzw. der Grenzwert für eine (zulässige bzw. nicht kollisionsbedingte) Abweichung zwischen dem, insbesondere aktuellen, Ist-Wert und dem, insbesondere aktuellen, Referenzwert, insbesondere einem, insbesondere hierfür (ohne Kollision), erwarteten, insbesondere prognostizierten und/oder modellbasierten bzw. Soll-Wert, der Achslast in Abhängigkeit bzw. auf Basis von einem oder mehreren vorhergehenden entsprechenden bzw. früheren Referenzwerten, insbesondere dessen Steigung bzw. Änderung über der Zeit, ermittelt.

Dem liegt die Überlegung zugrunde, dass bei, insbesondere stärkeren, Änderungen des Referenzwertes (größere) Abweichungen auftreten können, ohne dass diese durch eine Kollision bedingt sind, und die weitere Überlegung, dass eine, insbesondere aktuelle bzw., insbesondere unmittelbar, (nach)folgende, Änderung des Referenzwertes auf Basis eines oder mehrerer vorhergehender Referenzwerte, insbesondere deren Änderung(en), abgeschätzt werden kann. Entsprechend werden nach diesem (zweiten) Aspekt aus Daten der Vergangenheit Vorhersagen für ein aktuelles bzw. zukünftiges Verhalten getroffen.

Somit kann sich in einer Ausführung der Grenzwert vorteilhaft automatisch an unterschiedliche Umgebungsbedingungen, Posen, Bewegungen und dergleichen anpassen und so in einer Ausführung die Vorgabe von Grenzwerten vereinfachen und/oder eine zuverlässige(re) Erkennung tatsächlicher Kollisionen ermöglichen und/oder die Gefahr eines unbegründeten Ansprechens der Kollisionsüberwachung reduzieren.

In einer Ausführung wird der Grenzwert in Abhängigkeit von einer, insbesondere gleitenden, Änderung des Referenzwertes ermittelt. Dabei kann die (gleitende) Änderung in einer Ausführung auf Basis einer Differenz zwischen wenigstens einem vorhergehenden Referenzwert und dem aktuellen Referenzwert und/oder einer oder mehrerer Differenzen zwischen (jeweils) einem vorhergehenden Referenzwert und einem ebenfalls vorhergehenden aber jüngeren Referenzwert ermittelt werden, insbesondere unter Division durch den entsprechenden (Änderungs)Zeitraum zwischen diesen Referenzwerten. Insbesondere kann somit der Grenzwert in einer Ausführung in Abhängigkeit von einem, insbesondere gleitenden, Mittelwert, vorhergehender, insbesondere unmittelbar vorhergehender, Änderungen des Referenzwertes ermittelt werden. Unter einem Gleiten wird vorliegend insbesondere in fachüblicher Weise ein Mitwandern mit einem aktuellen Zeitpunkt bzw. ein Aktualisieren auf Basis eines aktuellen Zeitpunkts verstanden, unter einem gleitenden Mittelwert, einer gleitenden Änderung bzw. einem gleitenden Filter entsprechend insbesondere ein Mittelwert bzw. eine Änderung bzw. ein Filter über einen Zeitraum, der mit dem aktuellen Zeitpunkt mitwandert.

In einer Weiterbildung wird die (gleitende) Änderung über wenigstens 5 ms, insbesondere wenigstens 10 ms, und/oder höchstens 200 ms, insbesondere höchstens 100 ms, insbesondere höchstens 50 ms, ermittelt.

Hierdurch kann in einer Ausführung die aktuelle Änderung der Abweichung vorteilhaft prognostiziert werden.

In einer Ausführung wird der Grenzwert durch einen vorgegebenen minimalen und/oder maximalen Grenzwert limitiert.

Durch eine Limitierung auf einen vorgegebenen minimalen Grenzwert kann in einer Ausführung die Gefahr eines unbegründeten Ansprechens der Kollisionsüberwachung reduziert werden, durch eine Limitierung auf einen vorgegebenen maximalen Grenzwert in einer Ausführung die Gefahr einer Nicht-Erkennung tatsächlicher Kollisionen. In einer Ausführung beträgt der maximale Grenzwert hierzu wenigstens das Doppelte, insbesondere wenigstens das Fünffache, und/oder höchstens das Fünfzigfache, insbesondere höchstens das Zwanzigfache, des minimalen Grenzwerts.

In einer Ausführung ist bzw. wird der Grenzwert durch einen Anwender konfigurierbar bzw. konfiguriert, insbesondere skalierbar bzw. skaliert.

Hierdurch kann in einer Ausführung eine Sensibilität der Kollisionsüberwachung vorteilhaft anwendungsspezifisch angepasst werden, beispielsweise an unterschiedliche Prozess- und/oder Sicherheitsanforderungen, Roboterkonfigurationen oder dergleichen.

In einer Ausführung wird der Grenzwert in Abhängigkeit von einem aktuellen und/oder einem, insbesondere gleitend, gefilterten Faktor ermittelt, der, insbesondere nichtlinear, in Abhängigkeit von der Änderung des Referenzwertes ermittelt wird, insbesondere dem Größeren von dem aktuellen und dem (gleitend) gefilterten Faktor. Der Faktor steigt in einer Ausführung bei kleineren Änderungen des Referenzwertes stärker an als bei größeren Änderung, insbesondere, um vorteilhaft frühzeitig(er) zu reagieren.

Durch die Verwendung des aktuellen Faktors, der auf Basis der aktuellen (gleitenden) Änderung ermittelt wird, kann der Grenzwert vorteilhaft schnell reagieren. Durch die Verwendung des (gleitend) gefilterten Faktors, der auf Basis eines (gleitenden) Filters über vorhergehend(ermittelt)e Faktorwerte ermittelt wird, wird der Grenzwert vorteilhaft bei nur kurzzeitiger Variation des Referenzwertes vorteilhaft langsam(er) reduziert, durch die Verwendung des Größeren von beiden Werten beides vorteilhaft kombiniert. In einer Ausführung wird der Faktor über wenigstens 10 ms, insbesondere wenigstens 30 ms, und/oder höchstens 200 ms, insbesondere höchstens 150 ms, insbesondere höchstens 100 ms, gefiltert.

Nach einem weiteren (dritten) Aspekt der vorliegenden Erfindung, der zusätzlich zu dem ersten Aspekt oder beiden der vorgenannten Aspekte verwirklicht sein kann, wird ein bzw. der Referenzwert in Abhängigkeit von einem vorhergehenden Ist-Wert ermittelt, insbesondere in einem (weiteren) Betriebsmodus, in dem in einer Ausführung der Grenzwert von vorhergehenden Abweichungen zwischen Ist- und Sollwert und/oder vorhergehenden Soll-Werten unabhängig ist.

Dem liegt die Überlegung zugrunde, dass insbesondere bei niedrigeren Geschwindigkeiten die Güte von Soll-Werten abnehmen kann, beispielsweise aufgrund nicht oder nur grob modellierter Reibungseinflüsse, die dann maßgeblich(er) werden, oder dergleichen. So ergeben sich beispielsweise bei Kommandierung eines Stillstands des Roboters rasch konstante Soll-Werte für dessen Achslasten, während reglerbedingt, insbesondere zum Abbau von Schleppfehlern, Ist-Werte weiter (signifikant) variieren können.

Daher wird in einer Ausführung vorgeschlagen, anstellen der Abweichung von einem, insbesondere bei niedrigen Geschwindigkeiten unzuverlässigeren, Soll-Wert den Ist-Wert selber zur Kollisionsüberwachung mit einem Referenzwert zu vergleichen, der in Abhängigkeit von einem vorhergehenden (kollisionsfreien) Ist-Wert ermittelt wird, in einer Ausführung gleich diesem vorhergehenden (kollisionsfreien) Ist-Wert ist.

Wie vorstehend erläutert, nimmt insbesondere eine Modellgüte bei niedrigeren Achsgeschwindigkeiten ab. Entsprechend wird in einer Ausführung in Abhängigkeit von einer Geschwindigkeit des Roboters zwischen einem, ohne Beschränkung der Allgemeinheit auch als Bewegungs-Betriebsmodus bezeichneten, Betriebsmodus, in dem der Grenzwert, insbesondere nach dem ersten Aspekt, in Abhängigkeit von wenigstens einer vorhergehenden Abweichung zwischen Ist- und Referenzwert und/oder, insbesondere nach dem zweiten Aspekt, in Abhängigkeit von wenigstens einem vorhergehenden Referenzwert ermittelt wird, und einem weiteren, ohne Beschränkung der Allgemeinheit auch als Stillstands-Betriebsmodus bezeichneten, Betriebsmodus gewechselt, in dem der Referenzwert, insbesondere nach dem vorstehend zuletzt erläuterten weiteren (dritten) Aspekt in Abhängigkeit von einem vorhergehenden Ist-Wert ermittelt wird, insbesondere bei einem Unterschreiten einer vorgegebenen Grenzgeschwindigkeit in den Stillstands-Betriebsmodus und/oder bei einem Überschreiten einer, insbesondere derselben, vorgegebenen Grenzgeschwindigkeit (wieder) in den Bewegungs-Betriebsmodus

Hierdurch kann in einer Ausführung vorteilhaft geschwindigkeitsangepasst jeweils eine hierfür besonders vorteilhafte Kollisionsüberwachung durchgeführt werden. Die für das Umschalten zwischen den beiden Betriebsmodi maßgebliche G(renzg)eschwindigkeit kann insbesondere eine, insbesondere kommandierte und/oder erfasste, (Achs)Geschwindigkeit des Roboters, insbesondere der jeweiligen oder seiner schnellsten oder langsamsten Achse bzw. eine maximale bzw. minimale Achsgeschwindigkeit des Roboters, und/oder eine kartesische Geschwindigkeit einer roboterfesten Referenz, insbesondere seines TCPs, umfassen, insbesondere sein, die Grenzgeschwindigkeit insbesondere eine Geschwindigkeitstoleranz einer Stillstandsüberwachung.

Der (nach dem dritten Aspekt) ermittelte Referenzwert wird in einer Ausführung in Abhängigkeit von einer, insbesondere der oben genannten, Geschwindigkeit des Roboters, einem, insbesondere gleitenden, Minimalwert vorhergehender Abweichungen zwischen Ist- und hierfür (ohne Kollision) erwarteten, insbesondere modellbasierten bzw. Soll-Werten der Achslast und/oder einer Änderung eines Schleppfehlers der Achse ermittelt.

In einer Weiterbildung wird, insbesondere für ein schnelleres und/oder sanfteres Umschalten auch schon in dem Bewegungs-Betriebsmodus, jeweils eine Abweichungen zwischen Ist- und Soll-Wert beobachtet und jeweils ein (neuer) Referenzwert auf Basis desjenigen Ist-Werts ermittelt, der in dem zurückliegenden gleitenden Zeitfenster am wenigstens von dem zugehörigen Soll-Wert abweicht, insbesondere jeweils derjenige Ist-Wert als (neuer) Referenzwert ermittelt.

Auf diese Weise wird der (zuletzt) mit ausreichender bzw. hoher Güte als kollisionsfrei erkannte Ist-Wert als Referenzwert verwendet, sobald Soll-Werte für die Kollisionsüberwachung wenig(er) geeignet sind.

Zusätzlich oder alternativ wird in einer Weiterbildung, insbesondere in dem Stillstands-Betriebsmodus, jeweils ein (neuer) Referenzwert auf Basis eines, insbesondere aktuellen Ist-Werts ermittelt, falls ein Schleppfehler der Achse sich in vorgegebener Weise ändert, insbesondere um einen bestimmten Wert verringert, insbesondere jeweils der Ist-Wert bei Änderung um einen bestimmten Wert als (neuer) Referenzwert ermittelt.

Auf diese Weise kann in einer Ausführung auch bei einem Abbau eines (Stillstands)Schleppfehlers weiterhin die Vorgabe von Grenzwerten vereinfacht und/oder eine zuverlässige(re) Erkennung tatsächlicher Kollisionen ermöglicht und/oder die Gefahr eines unbegründeten Ansprechens der Kollisionsüberwachung reduziert werden. Als Schleppfehler wird vorliegend insbesondere in fachüblicher Weise eine (Regler)Abweichung zwischen erfassten Ist- und kommandierten Größen, insbesondere Achsstellungen, bezeichnet.

In einer Ausführung wird in Abhängigkeit von der Feststellung einer Kollision eine Sicherheitsreaktion durchgeführt, insbesondere wenigstes die (jeweilige) Achse, insbesondere der gesamte Roboter bzw. all seine Achsen, in eine nachgiebige Regelung umgeschaltet oder abgebremst, insbesondere stillgesetzt. Hierdurch kann in einer Ausführung eine Beschädigung des kollidierenden Hindernisses reduziert werden.

Nach einer Ausführung der vorliegenden Erfindung ist eine Steuerung zur Kollisionsüberwachung des Roboters, insbesondere hard- und/oder software-, insbesondere programmtechnisch, zur Durchführung eines hier beschriebenen Verfahrens eingerichtet.

In einer Ausführung weist die Steuerung bzw. ihr entsprechendes Mittel auf: Mittel zum Wechseln in Abhängigkeit von einer Geschwindigkeit des Roboters zwischen einem (Bewegungs-)Betriebsmodus, in dem der Grenzwert in Abhängigkeit von wenigstens einer vorhergehenden Abweichung zwischen Ist- und Referenzwert und/oder wenigstens einem vorhergehenden Referenzwert ermittelt wird, und einem weiteren (Stillstands-)Betriebsmodus, in dem der Referenzwert in Abhängigkeit von einem vorhergehenden Ist-Wert ermittelt wird.

In einer Ausführung weist die Steuerung bzw. ihr entsprechendes Mittel auf: Mittel zum Ermitteln des Grenzwerts in Abhängigkeit von einem, insbesondere gleitenden, insbesondere über wenigstens 5 ms und/oder höchstens 200 ms ermittelten, Mittelwert vorhergehender Abweichungen zwischen Ist- und Referenzwert und/oder in Abhängigkeit von einer, insbesondere gleitenden, insbesondere über wenigstens 5 ms und/oder höchstens 200 ms ermittelten, Änderung des Referenzwertes und/oder zum Ermitteln des Referenzwerts in Abhängigkeit von einer Geschwindigkeit des Roboters, einem, insbesondere gleitenden, insbesondere über wenigstens 5 ms und/oder höchstens 200 ms ermittelten, Minimalwert vorhergehender Abweichungen zwischen Ist- und erwarteten, insbesondere modellbasierten, Werten der Achslast und/oder einer Änderung eines Schleppfehlers der Achse.

In einer Ausführung weist die Steuerung bzw. ihr entsprechendes Mittel auf: Mittel zum Ermitteln des Grenzwerts in Abhängigkeit von einem aktuellen und/oder einem gefilterten Faktor, der, insbesondere nichtlinear, in Abhängigkeit von der, insbesondere gleitenden, Änderung des Referenzwertes ermittelt wird.

In einer Ausführung weist die Steuerung bzw. ihr entsprechendes Mittel auf: Mittel zum Limitieren des Grenzwerts durch einen vorgegebenen minimalen und/oder maximalen Grenzwert und/oder zum Konfigurieren, insbesondere Skalieren, des Grenzwerts durch einen Anwender.

In einer Ausführung weist die Steuerung bzw. ihr entsprechendes Mittel auf: Mittel zum Durchführen einer Sicherheitsreaktion, insbesondere nachgiebigem Regeln oder Abbremsen, insbesondere Stillsetzen, wenigstes der (jeweiligen) Achse, in Abhängigkeit von der Feststellung einer Kollision.

Ein Mittel im Sinne der vorliegenden Erfindung kann hard- und/oder softwaretechnisch ausgebildet sein, insbesondere eine, vorzugsweise mit einem Speicher- und/oder Bussystem daten- bzw. signalverbundene, insbesondere digitale, Verarbeitungs-, insbesondere Mikroprozessoreinheit (CPU) und/oder ein oder mehrere Programme oder Programmmodule aufweisen. Die CPU kann dazu ausgebildet sein, Befehle, die als ein in einem Speichersystem abgelegtes Programm implementiert sind, abzuarbeiten, Eingangssignale von einem Datenbus zu erfassen und/oder Ausgangssignale an einen Datenbus abzugeben. Ein Speichersystem kann ein oder mehrere, insbesondere verschiedene, Speichermedien, insbesondere optische, magnetische, Festkörper- und/oder andere nicht-flüchtige Medien aufweisen. Das Programm kann derart beschaffen sein, dass es die hier beschriebenen Verfahren verkörpert bzw. auszuführen imstande ist, sodass die CPU die Schritte solcher Verfahren ausführen kann und damit insbesondere den Roboter, insbesondere eine oder mehrere seiner Achsen, betreiben bzw. auf Kollision überwachen kann.

In einer Ausführung werden ein oder mehrere, insbesondere alle, Schritte des Verfahrens vollständig oder teilweise automatisiert durchgeführt, insbesondere durch die Steuerung bzw. ihr(e) Mittel.

Weitere Vorteile und Merkmale ergeben sich aus den Unteransprüchen und den Ausführungsbeispielen. Hierzu zeigt, teilweise schematisiert,:
Fig. 1: eine Roboteranordnung mit einem Roboter und einer Steuerung zur Kollisionsüberwachung des Roboters nach einer Ausführung der vorliegenden Erfindung; und
Fig. 2: ein Verfahren zur Kollisionsüberwachung des Roboters nach einer Ausführung der vorliegenden Erfindung.

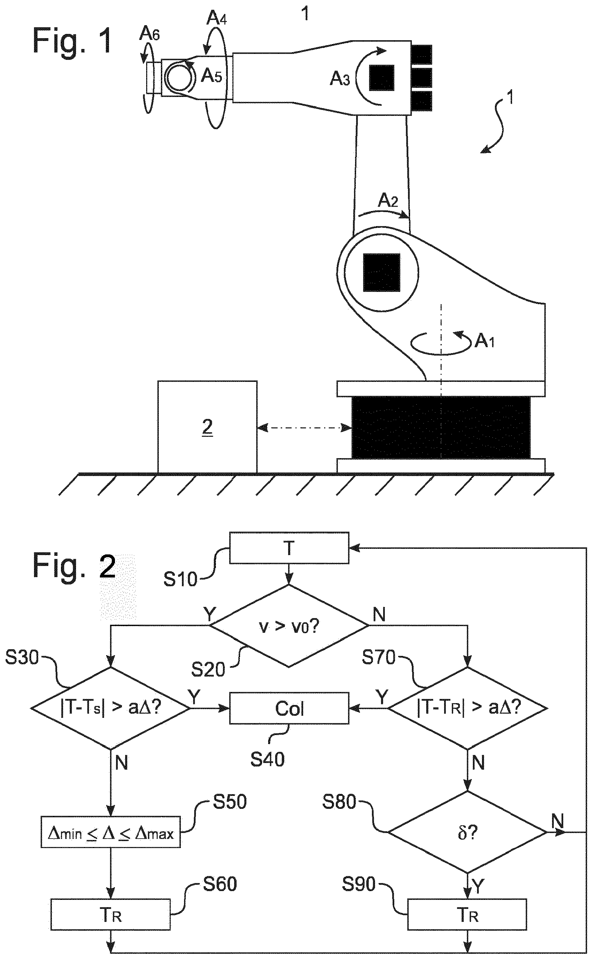

Fig. 1 zeigt eine Roboteranordnung mit einem Roboter 1 und einer Steuerung 2 zur Kollisionsüberwachung der sechs Achsen A₁ - A₆ des Roboters.

Die Steuerung führt hierzu ein nachfolgend mit Bezug auf Fig. 2 erläutertes Verfahren zur Kollisionsüberwachung des Roboters 1 nach einer Ausführung der vorliegenden Erfindung durch.

In einem Schritt S10 wird für jede (zu überwachende) Achse A₁ - A₆ des Roboters (jeweils) ein aktueller Ist-Wert T einer Achslast erfasst, beispielsweise mittels eines Antriebsstroms, über Drehmomentsensoren an den Achsen oder dergleichen.

In einem Schritt S20 wird geprüft, ob eine Geschwindigkeit v des Roboters 1 eine vorgegeben Geschwindigkeitstoleranz einer Stillstandsüberwachung v₀ überschreitet.

Solange dies der Fall ist (S20: "Y"), fährt die Steuerung 2 bzw. das Verfahren mit Schritt S30 fort.

In diesem wird geprüft, ob ein Abweichung |T-Tₛ| zwischen dem aktueller Ist-Wert T aus Schritt S10 und einem für diese Achslast ohne Kollision erwarteten Soll-Wert Tₛ, der modellbasiert ermittelt wird, einen durch entsprechende Wahl einer Konstanten a durch einen Anwender skalierten Grenzwert a·Δ übersteigt.

Ist dies der Fall (S30: "Y"), fährt die Steuerung 2 bzw. das Verfahren mit Schritt S40 fort, in dem eine Kollision festgestellt und der Roboter 1 stillgesetzt oder in eine nachgiebige(re) Regelung umgeschaltet wird.

Solange die Abweichung den Grenzwert nicht übersteigt (S30: "N"), fährt die Steuerung 2 bzw. das Verfahren mit Schritt S50 fort.

In diesem wird der Faktor Δ des Grenzwerts und damit gleichermaßen der skalierte Grenzwert a·Δ selber aktualisiert.

Nach dem vorstehend erläuterten ersten Aspekt wird hierzu der Faktor Δ gleich dem über die letzten 80 ms gleitenden Mittelwert der in Schritt S30 ermittelten vorhergehenden Abweichungen |T-Tₛ| gesetzt.

Sofern dieser Mittelwert einen vorgegebenen minimalen Grenzwert Δₘᵢₙ unterschreitet, wird der Faktor Δ stattdessen auf diesen minimalen Grenzwert Δₘᵢₙ gesetzt und hierdurch entsprechend nach unten limitiert.

Man erkennt, dass somit der Grenzwert a·Δ auf Basis eines gleitenden Mittelwertes vorhergehend(ermittelt)er Abweichungen |T-Tₛ| aktualisiert wird: werden diese langsam größer oder kleiner, kann dies aus einer sich ändernden Güte der Soll-Werte Tₛ bzw. eines diesen zugrundeliegenden Modells resultieren. Vorteilhaft wird der Grenzwert hieran automatisch angepasst, was die Häufigkeit eines unbegründeten Ansprechens der Kollisionsüberwachung und zugleich den Aufwand zur Konfiguration des Grenzwerts bzw. der Kollisionsüberwachung vorteilhaft reduziert, während gleichzeitig tatsächliche Kollisionen mit entsprechend rapide wachsenden Abweichungen zuverlässig(er) erkannt werden können.

Nach einer Ausführung gemäß dem vorstehend erläuterten zweiten Aspekt wird in Schritt S50 zunächst eine Änderung Δ_{T} des Soll-Wertes Tₛ über die letzten 12 ms ermittelt. Dann wird ein aktueller Faktor F ermittelt, der nichtlinear von dieser Änderung Δ_{T} abhängt, insbesondere bei kleineren Änderungen stärker ansteigt als bei größeren, beispielsweise in der Form F ∼ In(Δ_{T} + 1) oder einer, insbesondere linearen, Approximation hiervon. Zudem ist dieser Faktor F (und damit auch der Grenzwert) nach oben limitiert, beispielsweise auf 9. Dieser Faktor wird über die letzten 80 ms zu einem Faktor Fₘ (gleitend) gefiltert. Dann wird der Größere von dem aktuellen Faktor F und dem gefilterten Faktor Fₘ zu 1 addiert und das Ergebnis mit einem vorgegebenen minimalen Grenzwert Δₘᵢₙ zu dem Faktor Δ des Grenzwerts a·Δ multipliziert: a·Δ = a · Δₘᵢₙ · (1 + Max{F, Fₘ}).

Hierdurch wird der Grenzwert a·Δ aktualisiert und dabei nach unten auf a · Δₘᵢₙ und nach oben auf a · Δₘᵢₙ · 10 limitiert.

Man erkennt, dass somit der Grenzwert a·Δ auf Basis einer gleitenden Änderung Δ_{T} des Soll-Wertes Tₛ aktualisiert wird: ändert sich dieser stärker, kann dies die Güte der Soll-Werte Tₛ bzw. eines diesen zugrundeliegenden Modells reduzieren, ändert sich der Soll-Wert Tₛ demgegenüber weniger stark, kann sich entsprechend die Güte der Soll-Werte Tₛ bzw. des Modells verbessern. Vorteilhaft wird der Grenzwert hieran automatisch angepasst, was die Häufigkeit eines unbegründeten Ansprechens der Kollisionsüberwachung aufgrund vorhersehbarer Verschlechterungen der Güte der Soll-Werte und zugleich den Aufwand zur Konfiguration des Grenzwerts bzw. der Kollisionsüberwachung vorteilhaft reduziert, während gleichzeitig tatsächliche Kollisionen zuverlässig(er) erkannt werden können.

In einer Abwandlung kann der erste Aspekt mit dem zweite Aspekt kombiniert sein, beispielsweise, indem als neuer Grenzwert a · Δ der größere, kleinere oder Mittelwert der beiden vorstehend erläuterten Grenzwerte a · Δ verwendet wird.

In einem Schritt S60 wird ein (weiterer) Referenzwert T_{R} für die Achslast aktualisiert, der für den nachfolgend erläuterten dritten Aspekt verwendet wird.

Dabei wird jeweils die in Schritt S30 ermittelte Abweichung |T-Tₛ| mit einer in einem mitgleitenden Zeitraum ermittelten minimalen Abweichung (|T-Tₛ|)ₘᵢₙ verglichen. Ist die aktuell(ermittelt)e Abweichung |T-Tₛ| kleiner als diese minimale Abweichung (|T-Tₛ|)ₘᵢₙ, so wird der aktuell(ermittelt)e Ist-Wert T als neuer Referenzwert T_{R} übernommen. Zusätzlich kann der weitere Referenzwert T_{R} auf das Maximum oder Minimum des aktuellen Ist- und/oder Soll-Wertes limitiert sein, um stets einen Wert zu erhalten.

Dann kehrt die Steuerung 2 bzw. das Verfahren zu Schritt S10 zurück.

Überschreitet in Schritt S20 die Geschwindigkeit v des Roboters 1 die vorgegeben Grenzgeschwindigkeit v₀ nicht (S20: "N"), fährt die Steuerung 2 bzw. das Verfahren mit Schritt S70 fort.

In diesem Stillstands-Betriebsmodus wird davon ausgegangen, dass (im Gegensatz zum Bewegungs-Betriebsmodus der Schritte S30, S50 und S60) die Soll-Werte bzw. ein diesen zugrundeliegendes Modell für eine Kollisionsüberwachung wenig(er) geeignet sind.

So stellen sich insbesondere bei einem kommandierten Stillstand des Roboters 1 rasch konstante Soll-Werte ein, die in der Regel nur die Gravitation kompensieren. Demgegenüber können Ist-Werte der Achslasten jedoch weiterhin variieren, insbesondere aufgrund eines Positionierverhaltens des Reglers, von Regelzittern bzw. -brummen, einem Abbau beim Anfahren einer Stillstandspose noch verbliebenen Schleppfehlern oder dergleichen.

Hieraus ergeben sich Abweichungen zwischen Ist- und Soll-Werten, die in Schritt S30 zu einem unbegründeten Ansprechen der Kollisionsüberwachung führen könnten

Daher wird in Schritt S70 des Stillstands-Betriebsmodus stattdessen der aktuelle Ist-Wert mit dem in Schritt S60 ermittelten (weiteren) Referenzwert T_{R} verglichen, der demjenigen Ist-Wert entspricht, der bei einer höheren Geschwindigkeit (v > v₀) und damit entsprechend besseren Güte der Soll-Werte bzw. des Modells zuletzt die geringste Abweichung aufwies.

In Schritt S70 kann ein in Schritt S50 zuletzt ermittelter Grenzwert oder ein anderer, insbesondere fest vorgegebener oder durch den Anwender konfigurierbarer Grenzwert a·Δ verwendet werden.

Wie in Schritt S30 führt auch in Schritt S70 ein Übersteigen dieses Grenzwertes a·Δ durch die Abweichung |T-T_{R}| zwischen dem aktueller Ist-Wert T aus Schritt S10 und dem (weiteren) Referenzwert T_{R} (S70: "Y") über Schritt S40 zur Feststellung einer Kollision und einem Stillsetzen oder Umschalten der Roboter 1 in eine nachgiebige(re) Regelung.

Andernfalls (S70: "N") wird in Schritt S80 geprüft, ob ein Schleppfehler δ sich um einen vorgegebenen Wert verringert hat.

Ist dies nicht der Fall (S80: "N"), wird der Referenzwert T_{R} beibehalten und die Steuerung 2 bzw. das Verfahren kehrt zu Schritt S10 zurück.

Andernfalls (S80: "Y") wird zuvor in einem Schritt S90 der aktuellen Ist-Wert T als neuer Referenzwert T_{R} übernommen, bevor die Steuerung 2 bzw. das Verfahren zu Schritt S10 zurückkehrt.

Man erkennt, dass somit auch bei konstanten Soll-Werten aufgrund eines kommandierten Stillstands des Roboters 1 weiterhin variierende Ist-Werte, die sich beispielsweise durch den Abbau von Schleppfehlern ergeben, nicht zu einer (unbegründeten) Feststellung einer Kollision führen. Dabei wird der Referenzwert T_{R}, mit dem der aktuelle Ist-Wert verglichen wird, bereits im Bewegungs-Betriebsmodus laufend aktualisiert (vgl. Schritt S60), so dass er bei Umschalten in den Stillstands-Betriebsmodus bereits zur Verfügung steht, und zudem auch im Stillstands-Betriebsmodus an den abgebauten Schleppfehler und damit eine sich reduzierende Variation des Ist-Wertes angepasst (vgl. Schritt S90).

Obwohl in der vorhergehenden Beschreibung exemplarische Ausführungen erläutert wurden, sei darauf hingewiesen, dass eine Vielzahl von Abwandlungen möglich ist. So kann insbesondere Schritt S60 vor Schritt S60 und/oder Schritt S70 vor Schritt S90 ausgeführt werden.

Außerdem sei darauf hingewiesen, dass es sich bei den exemplarischen Ausführungen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einer exemplarischen Ausführung gegeben, wobei diverse Änderungen, insbesondere in Hinblick auf die Funktion und Anordnung der beschriebenen Bestandteile, vorgenommen werden können, ohne den Schutzbereich zu verlassen, wie er sich aus den Ansprüchen ergibt.

### Bezugszeichenliste

- 1: Roboter
- 2: Steuerung
- A₁ - A₆: Achse
- T: aktueller Ist-Wert
- T_{R}: (weiterer) Referenzwert
- Tₛ: Soll-Wert (Referenzwert)
- v₍₀₎: G(renz)geschwindigkeit
- a·Δ: Grenzwert
- Δ_{min/max}: minimaler/maximaler Grenzwert
- δ: Schleppfehler

## Patentansprüche

1. Verfahren zur Kollisionsüberwachung eines Roboters (1), mit den Schritten:
- Ermitteln (S10) eines Ist-Wertes (T) einer Achslast wenigstens einer Achse (A₁ - A₆) des Roboters und
- Feststellen (S40) einer Kollision des Roboters,
**dadurch gekennzeichnet, dass**
die Kollision des Roboters festgestellt wird, falls eine Abweichung zwischen diesem Ist-Wert und einem Referenzwert (Tₛ; T_{R}) der Achslast einen Grenzwert übersteigt,
wobei
der Grenzwert in Abhängigkeit von wenigstens einer vorhergehenden Abweichung zwischen Ist- und Referenzwert ermittelt wird,
wobei
der Grenzwert in Abhängigkeit von
einem gleitenden Mittelwert vorhergehender Abweichungen zwischen Ist- und Referenzwert ermittelt wird,
wobei
der gleitende Mittelwert über wenigstens 5 ms und/oder höchstens 200 ms ermittelt wird.

2. Verfahren nach Anspruch 1, **dadurch gekennzeichnet, dass** in Abhängigkeit von
einer Geschwindigkeit (v) des Roboters zwischen einem Betriebsmodus, in dem der Grenzwert in Abhängigkeit von wenigstens einer vorhergehenden Abweichung zwischen Ist- und Referenzwert und/oder wenigstens einem vorhergehenden Referenzwert ermittelt wird,
und einem weiteren Betriebsmodus gewechselt wird,
in dem der Referenzwert in Abhängigkeit von einem vorhergehenden Ist-Wert ermittelt wird.

3. Verfahren nach einem der vorhergehenden Ansprüche, **dadurch gekennzeichnet, dass** der Referenzwert, insbesondere in dem einen Betriebsmodus, ein erwarteter, insbesondere modellbasierter, Wert (Tₛ) der Achslast ist.

4. Verfahren nach einem der vorhergehenden Ansprüche, **dadurch gekennzeichnet, dass**
der Grenzwert in Abhängigkeit von
einer, insbesondere gleitenden, Änderung, insbesondere einer gleitenden und über wenigstens 5 ms und/oder höchstens 200 ms ermittelten Änderung, des Referenzwertes und/oder
der Referenzwert in Abhängigkeit von
einer Geschwindigkeit des Roboters, einem, insbesondere gleitenden, Minimalwert vorhergehender Abweichungen zwischen Ist- und erwarteten, insbesondere modellbasierten, Werten der Achslast und/oder einer Änderung eines Schleppfehlers der Achse ermittelt wird.

5. Verfahren nach einem der vorhergehenden Ansprüche, **dadurch gekennzeichnet, dass** der Grenzwert in Abhängigkeit von einem aktuellen und/oder einem gefilterten Faktor ermittelt wird, der, insbesondere nichtlinear, in Abhängigkeit von der Änderung des Referenzwertes ermittelt wird.

6. Verfahren nach dem vorhergehenden Anspruch, **dadurch gekennzeichnet, dass** der Faktor über wenigstens 10 ms und/oder höchstens 200 ms gefiltert wird.

7. Verfahren nach einem der vorhergehenden Ansprüche, **dadurch gekennzeichnet, dass** der Grenzwert durch einen vorgegebenen minimalen und/oder maximalen Grenzwert (Δₘᵢₙ, Δₘₐₓ) limitiert wird.

8. Verfahren nach einem der vorhergehenden Ansprüche, **dadurch gekennzeichnet, dass** der Grenzwert durch einen Anwender konfigurierbar, insbesondere skalierbar, ist.

9. Verfahren nach einem der vorhergehenden Ansprüche, **dadurch gekennzeichnet, dass** in Abhängigkeit von der Feststellung einer Kollision eine Sicherheitsreaktion durchgeführt, insbesondere wenigstes die Achse nachgiebig geregelt oder abgebremst, insbesondere stillgesetzt, wird (S40).

10. Steuerung (2) zur Kollisionsüberwachung eines Roboters (1), die zur Durchführung eines Verfahrens nach einem der vorhergehenden Ansprüche eingerichtet ist.

11. Roboteranordnung mit einem Roboter (1) und einer Steuerung (2) zur Kollisionsüberwachung des Roboters nach einem der vorhergehenden Ansprüche.

12. Computerprogrammprodukt mit einem Programmcode, der auf einem von einem Computer lesbaren Medium gespeichert ist, zur Durchführung eines Verfahrens nach einem der vorhergehenden Ansprüche 1 bis 9.

## Claims

1. A method for collision monitoring of a robot (1), the method comprising the following steps:
- determining (S10) an actual value (T) of an axle load of at least one axle (A₁ - A₆) of the robot, and
- identifying (S40) a collision of the robot,
**characterised in that**
the collision of the robot is identified if a deviation between said actual value and a reference value (Tₛ; T_{R}) of the axle load exceeds a limit value,
wherein
the limit value is determined as a function of at least one preceding deviation between the actual value and the reference value,
wherein
the limit value is determined as a function of
a sliding average value of preceding deviations between the actual value and the reference value,
wherein
the sliding average value is determined over at least 5 ms and / or at most 200 ms.

2. The method according to claim 1, **characterised in that**, as a function of a speed (v) of
the robot, a change is made between a mode of operation,
in which the limit value is determined as a function of at least one preceding deviation between the actual value and the reference value and / or as a function of at least one preceding reference value,
and a further mode of operation,
in which the reference value is determined as a function of a preceding actual value.

3. The method according to any one of the preceding claims, **characterised in that** the reference value, in particular in the one mode of operation, is an expected value (Tₛ) of the axle load, in particular an expected, model-based value (Tₛ) of the axle load.

4. The method according to any one of the preceding claims, **characterised in that**
the limit value is determined as a function of
a change in the reference value, in particular a sliding change in the reference value, in particular a sliding change in the reference value that is determined over at least 5 ms and / or at most 200 ms, and / or
the reference value is determined as a function of
a speed of the robot, a minimum value of preceding deviations between actual and expected values of the axle load, in particular a sliding minimum value of preceding deviations between actual and expected values of the axle load, in particular a minimum value of preceding deviations between actual and model-based expected values of the axle load, in particular a sliding minimum value of preceding deviations between actual and model-based expected values of the axle load, and / or a change in a tracking error of the axle.

5. The method according to any one of the preceding claims, **characterised in that** the limit value is determined as a function of a current and / or a filtered factor which is determined, in particular in a non-linear manner, as a function of the change in the reference value.

6. The method according to the preceding claim, **characterised in that** the factor is filtered over at least 10 ms and / or at most 200 ms.

7. The method according to any one of the preceding claims, **characterised in that** the limit value is limited by a predetermined minimum and / or maximum limit value (Δₘᵢₙ, Δₘₐₓ).

8. The method according to any one of the preceding claims, **characterised in that** the limit value is able to be configured by a user, in particular in a scalable manner.

9. The method according to any one of the preceding claims, **characterised in that**, as a function of the identification of a collision, a safety response is carried out, in particular at least said axle is flexibly controlled or decelerated, in particular shut down (S40).

10. A controller (2) for collision monitoring of a robot (1), which controller is arranged to carry out a method in accordance with any one of the preceding claims.

11. A robot arrangement comprising a robot (1) and a controller (2) for collision monitoring of the robot in accordance with any one of the preceding claims.

12. A computer program product comprising a program code, which is stored on a medium that can be read by a computer, for carrying out a method in accordance with any one of the preceding claims 1 to 9.

## Revendications

1. Procédé de surveillance anticollision d'un robot (1), comprenant les étapes consistant à :
- déterminer (S10) une valeur réelle (T) d'une charge d'axe d'au moins un axe (A₁ - A₆) du robot et
- identifier (S40) une collision du robot,
**caractérisé en ce que**
la collision du robot est identifiée si un écart entre cette valeur réelle et une valeur de référence (Tₛ ; T_{R}) de la charge d'axe est supérieur à une valeur limite,
dans lequel
la valeur limite est déterminée en fonction d'au moins un écart précédent entre la valeur réelle et la valeur de référence,
dans lequel
la valeur limite est déterminée
en fonction d'une valeur moyenne glissante des écarts précédents entre la valeur réelle et la valeur de référence,
dans lequel
la valeur moyenne glissante est déterminée sur au moins 5 ms et / ou au plus 200 ms.

2. Procédé selon la revendication 1, **caractérisé en ce que**, en fonction d'une vitesse (v) du
robot, un basculement est effectué entre un mode de fonctionnement,
dans lequel la valeur limite est déterminée en fonction d'au moins un écart précédent entre la valeur réelle et la valeur de référence et / ou au moins une valeur de référence précédente,
et un autre mode de fonctionnement,
dans lequel la valeur de référence est déterminée en fonction d'une valeur réelle précédente.

3. Procédé selon l'une quelconque des revendications précédentes, **caractérisé en ce que** la valeur de référence, en particulier dans le premier mode de fonctionnement, est une valeur (Tₛ) attendue, en particulier une valeur (Tₛ) attendue basée sur un modèle, de la charge d'axe.

4. Procédé selon l'une quelconque des revendications précédentes, **caractérisé en ce que**
la valeur limite est déterminée
en fonction d'une variation, en particulier glissante, de la valeur de référence, en particulier en fonction d'une variation glissante de la valeur de référence, dans lequel la variation glissante de la valeur de référence est déterminée sur au moins 5 ms et / ou au plus 200 ms et / ou
la valeur de référence est déterminée
en fonction d'une vitesse du robot, d'une valeur minimale, en particulier glissante, d'écarts précédents entre des valeurs réelles et des valeurs attendues, en particulier basées sur un modèle, de la charge d'axe, et / ou d'une variation d'une erreur de poursuite de l'axe.

5. Procédé selon l'une quelconque des revendications précédentes, **caractérisé en ce que** la valeur limite est déterminée en fonction d'un facteur actuel et / ou filtré qui est déterminé, en particulier de manière non linéaire, en fonction de la variation de la valeur de référence.

6. Procédé selon la revendication précédente, **caractérisé en ce que** le facteur est filtré sur au moins 10 ms et / ou au plus 200 ms.

7. Procédé selon l'une quelconque des revendications précédentes, **caractérisé en ce que** la valeur limite est limitée par une valeur limite minimale et / ou maximale (Δₘᵢₙ, Δₘₐₓ) prédéterminée.

8. Procédé selon l'une quelconque des revendications précédentes, **caractérisé en ce que** la valeur limite peut être configurée, en particulier soumise à un changement d'échelle, par un utilisateur.

9. Procédé selon l'une quelconque des revendications précédentes, **caractérisé en ce qu'**en fonction de l'identification d'une collision, une réaction de sécurité est effectuée, en particulier **en ce qu'**au moins l'axe est réglé ou freiné de manière souple, en particulier amené à l'arrêt (S40).

10. Dispositif de commande (2) de surveillance anticollision d'un robot (1), qui est conçu pour mettre en oeuvre un procédé selon l'une quelconque des revendications précédentes.

11. Système de robot comprenant un robot (1) et un dispositif de commande (2) de surveillance anticollision du robot selon l'une quelconque des revendications précédentes.

12. Produit de programme informatique comprenant un code de programme stocké sur un support lisible par ordinateur pour mettre en oeuvre un procédé selon l'une quelconque des revendications précédentes 1 à 9.
